# EUROPEAN PATENT SPECIFICATION

(11) **EP 3 686 089 B1**
(45) Date of publication and mention of the grant of the patent: **20.07.2022**
(21) Application number: 20152505.2
(22) Date of filing: 17.01.2020
(51) Int. Cl.: B62D 25/16

(54) **FAST LOCKING / UNLOCKING DEVICE FOR CONSTRAINING A FENDER TO A FRAME PROVIDED WITH SLIDING GUIDES**
SCHNELLVERSCHLUSS FÜR DAS HALTEN EINES KOTFLÜGELS AN EINEN RAHMEN VERSEHEN MIT GLEITSCHIENEN
LIBÉRATION RAPIDE POUR TENIR UN GARDE-BOUE SUR UN CADRE FOURNI DE RAILS DE GLISSEMENT

(30) Priority: 22.01.2019 IT 201900000847
(43) Date of publication of application: 29.07.2020
(73) Proprietor: DOMAR S.p.A., 75100 Matera (IT)
(72) Inventor: LORUSSO, Antonio, 75100 MATERA (IT)
(74) Representative: Conversano, Gabriele

(56) References cited:
- IT-A1- MI20 111 134

## Description

### Technical field

The present invention relates to a system for fastening a fender to a frame of a vehicle, and in particular the frame of trucks, TIR and other heavy vehicles, which allows a safe and rapid fixing as well.

More in particular, the device object of the present invention is conceived to guarantee a rapid and efficient fixing of fender models provided with guides for adjusting the fastening means position and which are so designed to be assembled with various motor vehicles models.

Moreover, the present invention provides a kit made up of a fender provided with sliding guides and the respective rapid blocking/releasing device.

### State of the art

At the state of the art, there are known various embodiments of devices for fixing fenders to frames of trucks and similar vehicles. Fenders are typically provided with a cylindrical housing configured to receive a tube integral to the frame. The axial sliding of the fender to the tube is limited by means of blocking devices. These devices are engaged in the tube and fender housing, and fasten the two pieces relative axial position. However, some fender models are not provided with a cylindrical housing configured to receive a tube integral to the frame, and so the problem to provide a coupling device which allows a rapid and safe fixing to the frame of a motor vehicle, also for these devices, remains unsolved.

**An example of a device known to the art is disclosed in document ITMI20111134.**

### Aim of the invention

Aim of the present invention is to provide a fastening system of a fender to a frame of a truck, which overcomes the limits linked to the devices known according to the state of the art, and which can be applied to those fenders not provided with suitable housings for fastening to tubes integral to the frame. In particular, the invention provides a rapid coupling/decoupling system to guarantee a rapid and efficient fixing of fender models provided with position adjusting guides as well as a kit made up of a fender provided with sliding guides and the relative rapid blocking/releasing device.

### Brief description of the invention

The invention reaches the prefixed aims since it is a rapid blocking/releasing device for fastening a fender (40) provided with guides, comprising: a fender (40), an insert (20) configured to be introduced in a hollow tube (30) integral to the frame of a vehicle, and a fastening means (10) configured to be fastened both to said insert (20) and the fender (40), wherein that said fender comprises on its outer surface at least a couple of parallel guides (46, 47), in that said fastening means (10) comprises in its own lower portion two shaped profiles (16, 17) configured to engage said guides (46, 47) and in that the geometry of said guides (46, 47) and said profiles (16, 17) is such that the same can engage the guides (46, 47) only by means of sliding from the lower portion thereof, and that once the profiles have engaged the guides the only movement allowed between said fastening means (10) and said fender (40) is sliding along the axis of the guides.

### Detailed description of the invention

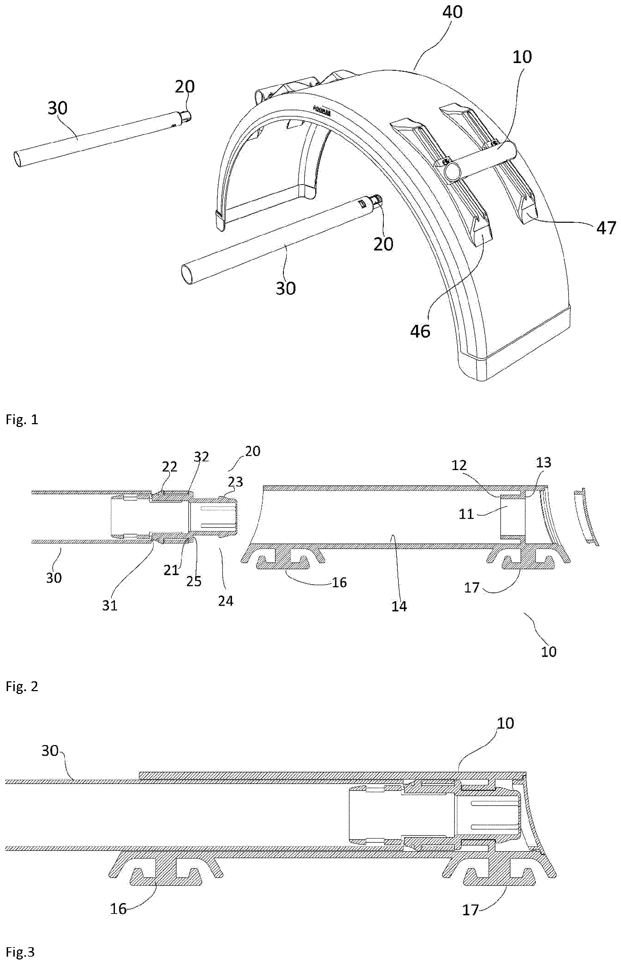

The invention will be described in the following with reference to the appended figures 1 to 7 which show a preferred embodiment thereof.

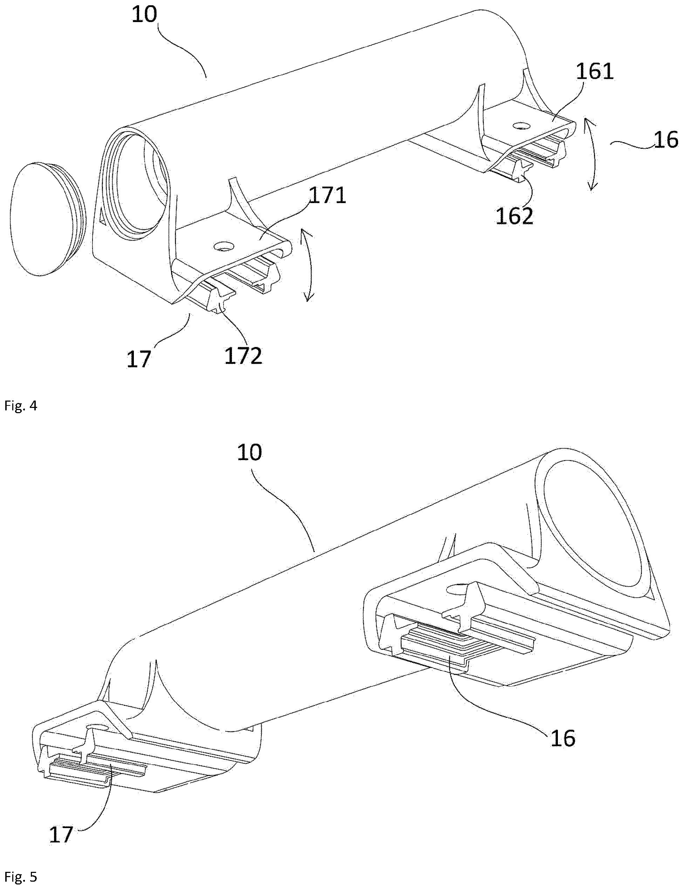

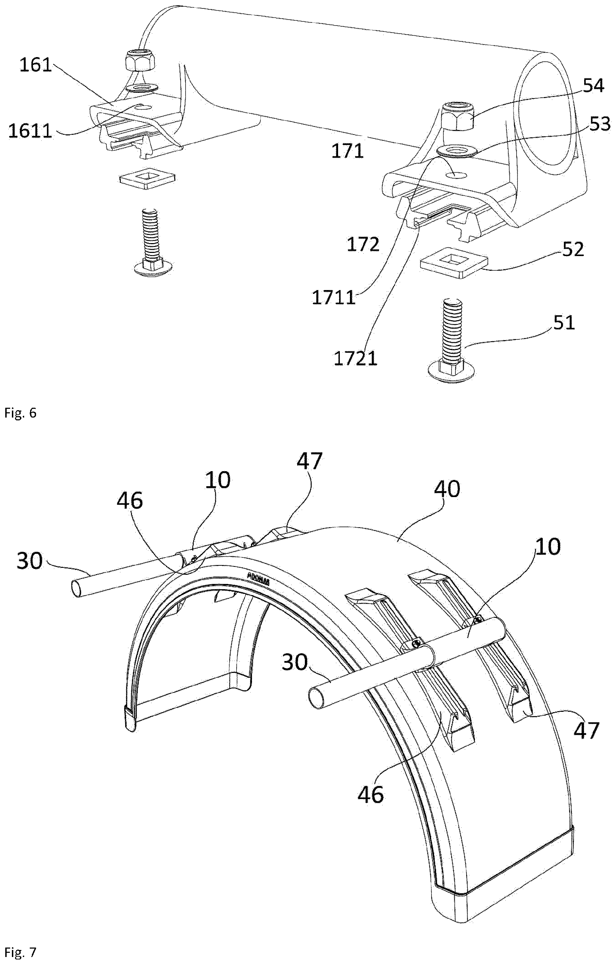

Figure 1 shows a view of the device assembled on the fender and the respective tubes for fastening to the frame (the frame is not shown in figure); figure 2 and 3 show two section views of the fastening device, disassembled and assembled respectively; figures 4 and 5 show two perspective views of the device, shown in exploded view in figure 6. Figure 7 shows a whole assembly assembled.

The device (1) according to the invention comprises a plastic insert (20) configured to be introduced in a hollow tube (30) integral to the frame of a vehicle, a fastening means (10) configured to be fastened both to said insert (20) and the fender (40) .

The substantially cylindrical plastic insert (20) comprises an abutting surface (21) and at least a snap hook (22). The insert is configured so that by introducing it inside a tube (30), the snap hook (22) engages a suitable hole (31) provided in the tube (30), and the abutting surface is stopped against the end portion (32) of the tube (30), thus fastening the axial sliding of the insert (20) to the tube (30). The provision of at least one, and preferably more than one snap hooks (22) fastens also the relative rotation between insert (20) and tube (30). The projecting portion (24) of the insert is also provided with an outer abutting surface (25).

In the portion (24) remaining projecting with respect to the tube (30), the insert (20) comprises also at least one, and preferably more than one wedge hooks (23), configured to engage an abutting surface (13) provided in a suitable housing (11) of the fastening means (10).

The fastening means (10) comprises in fact a cylindrical housing (11) provided with a first (12) and a second abutting surface (13). The housing and the abutting surfaces are configured so that, when the projecting portion (24) of the insert (20) is introduced in said housing (11), the first abutting surface (12) is stopped against the outer abutting (25) of said insert (20), and the second abutting surface (13) is engaged by said at least one wedge hook (23), thus fastening in both directions the relative axial sliding of the fastening means (10) to the insert (20) and so to the tube (30). Moreover, conveniently, the fastening means (10) comprises also a second housing (14), of greater dimensions, configured to be coupled with the tube (30), when the first cylindrical housing (11) is coupled with the projecting portion (24) of the insert (20) in the just described way.

The fastening means (10) comprises also in its own lower portion two shaped profiles (16, 17) configured to engage respective guides (46, 47) provided on the fender (40). The geometry of the guides (46, 47) and shaped profiles (16, 17) is such that the same can engage the guides (46, 47) only by means of sliding from the lower portion of the same, and that once engaged the guides the only movement allowed between the fastening means (10) and the fender (40) is sliding along the axis of the guides.

As it is clear from figures 4 to 6, said shaped profiles comprise each an upper surface (161, 171), a lower shaped body (162, 172) and a space comprised between said upper surface (161, 171) and said lower shaped body (162, 172). Such space has suitable shape to allow to engage a respective sliding guide (46, 47) provided on the fender. The shaped profiles are characterized in that said lower shaped body (162, 172) is configured so that its distance from said upper surface (161, 171) can vary by actuating suitable clamping means.

Preferably, as it is shown in figures, said shaped body (162, 172) is realized as piece with said fastening means and the geometry is such that said shaped body can have a stroke in the direction highlighted by the arrows in figure 4, if forced by means of suitable clamping means.

Preferably, the fastening means (10) comprises clamping means (51, 52, 53, 54) configured to push, after the action of a tool, said shaped body towards said upper surface. According to a preferred embodiment, said clamping means comprise a screw with round head and square shaft (51), a square washer (52), a round washer (53) and an anti-unscrewing nut (53), which can be assembled so to press said shaped body (162, 172) and said upper surface (161, 171) between the two washers (52, 53). In order to allow the passage of said screw, the upper surface (161, 171) is conveniently provided with a through hole (1611, 1711). Moreover, preferably, the shaped body (162, 172) comprises a seat (1721) in which said square washer (52) can be introduced so that it remains in position without difficulties in the assembling step, and so that the pressure area by the clamping means on said shaped body (162, 172) is well defined.

The functioning of the just described device is such that once the fastening means (10) has engaged with its own shaped profiles (16, 17) the guides (46, 47) of the fender (40), the same can slide freely up to the desired assembly position, and in the following, by means of the action on said clamping means, said shaped bodies (162, 172) can be approached towards said upper surface (161, 172), thus fixing by friction the relative position between fastening means and fender. The provision of the washers and anti-unscrewing nut causes that after the fixing the clamping remains constant also with strokes and vibrations, the fender is inevitably subject to during its functioning.

In this way, a single model of fender (40) can be provided with fastening means (10) integral to the same and whose position can be varied according to the position of the tubes (30) provided on the frame of the motor vehicle, thus allowing the assembly of the same fender on a plurality of various models.

Preferably, as it is shown in figures 1 to 7, the fender comprises two couples of sliding guides (46, 47), to each one of which a respective fastening means (10) can be associated, so that the fixing of the fender (40) to a couple of tubes (30) integral to the frame can be allowed, thus increasing the coupling stability.

## Claims

1. Rapid blocking/releasing device for fastening a fender (40) provided with guides, comprising:
- a fender (40),
- an insert (20) configured to be introduced in a hollow tube (30) integral to the frame of a vehicle, and
- a fastening means (10) configured to be fastened both to said insert (20) and **to said** fender (40),
said fender compris**ing** on its outer surface at least a couple of parallel guides (46, 47), said fastening means (10) compris**ing**-e-s- in its own lower portion two shaped profiles (16, 17) configured to engage said guides (46, 47), **each of said shaped profiles comprising an upper surface (161, 171), a lower shaped body (162, 172) and a space comprised between said upper surface (161, 171) and said lower shaped body (162, 172),** wherein said lower shaped body (162, 172) is configured so that its distance from said upper surface (161, 171) can vary following the actuation of suitable clamping means, the geometry of said guides (46, 47) and said profiles (16, 17) **being** such that the same can engage the guides (46, 47) only by means of sliding from the lower portion thereof, and that once said profiles (16, 17) have engaged the guides the only movement allowed between said fastening means (10) and said fender (40) is sliding along the axis of the guides
wherein **said fastening means (10) comprises clamping means (51, 52, 53, 54) configured to push, after the action of a tool, said shaped body (162, 172) towards said upper surface (161, 171), characterized in that said clamping means comprise a screw with round head and square shaft (51), a square washer (52), a round washer (53) and an anti-unscrewing nut (53), and in that the same can be assembled so to press said shaped body (162, 172) and said upper surface (161, 171) between said washers (52, 53).**

2. Rapid blocking/releasing device for fastening a fender (40) provided with guides according to claim 1, **characterized in that** said space comprised between said upper surface (161, 171) and said lower shaped body (162, 172), has suitable shape to allow to engage a respective sliding guide (46, 47) provided on the fender (40).

3. Rapid blocking/releasing device for fastening a fender (40) provided with guides according to claim 2, **characterized in that** said shaped body (162, 172) comprises a seat (1721) in which said square washer (52) can be introduced so that it remains in position without difficulties in the assembling step, and so that the pressure area by the clamping means on said shaped body (162, 172) is well defined.

4. Rapid blocking/releasing device for fastening a fender (40) provided with guides according to any one of claims 2 and 3 **characterized in that** said fastening means (10) and said at least one couple of guides (46, 47) are configured so that, once said fastening means (10) has engaged with its own shaped profiles (16, 17) the guides (46, 47) of the fender (40), the same can slide freely up to the desired assembly position, and in the following, by means of the action on said clamping means, said shaped bodies (162, 172) can be approached towards said upper surface (161, 172), thus fixing by friction the relative position between fastening means and fender.

5. Rapid blocking/releasing device for fastening a fender (40) provided with guides according to any one of the preceding claims, **characterized in that** said fender (40) comprises two couples of sliding guides (46, 47), to each one of which a respective fastening means (10) can be associated, so that the fixing of the fender (40) to a couple of tubes (30) integral to the frame can be allowed.

## Patentansprüche

1. Schnellblockier-/Lösevorrichtung zum Befestigen eines mit Führungen versehenen Kotflügels (40), umfassend:
- einen Kotflügel (40),
- einen Einsatz (20), der konfiguriert ist, um in ein hohles Rohr (30) eingeführt zu werden, das integral mit dem Rahmen eines Fahrzeugs ist, und
- ein Befestigungsmittel (10), das so konfiguriert ist, dass es sowohl am Einsatz (20) als auch am Kotflügel (40) befestigt werden kann, wobei der Kotflügel auf seiner Außenfläche mindestens ein Paar von parallelen Führungen (46, 47) umfasst, wobei das Befestigungsmittel (10) in seinem eigenen unteren Abschnitt zwei geformte Profile (16, 17) umfasst, die so konfiguriert sind, dass sie mit den Führungen (46, 47) in Eingriff kommen, wobei jedes der geformten Profile eine obere Fläche (161, 171), einen unteren geformten Körper (162, 172) und einen Zwischenraum zwischen der oberen Fläche (161, 171) und dem unteren geformten Körper (162, 172) umfasst, wobei der untere geformte Körper (162, 172) so konfiguriert ist, dass sein Abstand von der oberen Fläche (161, 171) nach Betätigung geeigneter Klemmmittel variieren kann, wobei die Geometrie der Führungen (46, 47) und der Profile (16, 17) derart ist, dass dieselben nur durch Gleiten von unten in die Führungen (46, 47) eingreifen können, und dass, sobald die Profile (16, 17) in die Führungen eingegriffen haben, ist die einzige erlaubte Bewegung zwischen dem Befestigungsmittel (10) und dem Kotflügel (40) aus einem Gleiten entlang der Achse der Führungen besteht, wobei das Befestigungsmittel (10) Klemmmittel (51, 52, 53, 54) umfasst, die so konfiguriert sind, dass sie nach der Wirkung eines Werkzeugs den geformten Körper (162, 172) in die obere Fläche (161, 171) drücken, **dadurch gekennzeichnet, dass** die Klemmmittel eine Schraube mit rundem Kopf und quadratischem Schaft (51), eine quadratische Unterlegscheibe (52), eine runde Unterlegscheibe (53) und eine Mutter (53) gegen das Herausdrehen umfassen, und dass diese so zusammengebaut werden können, dass der geformte Körper (162, 172) und die obere Fläche (161, 171) zwischen die Unterlegscheiben (52, 53) gepresst werden.

2. Schnellblockier-/Lösevorrichtung zum Befestigen eines mit Führungen versehenen Kotflügels (40) nach Anspruch 1, **dadurch gekennzeichnet, dass** der zwischen der oberen Fläche (161, 171) und dem unteren geformten Körper (162, 172) eingeschlossene Raum eine geeignete Gestalt aufweist, um den Eingriff mit einer entsprechenden Gleitführung (46, 47) zu ermöglichen, die an dem Kotflügel (40) vorgesehen ist.

3. Schnellblockier-/Lösevorrichtung zum Befestigen eines mit Führungen versehenen Kotflügels (40) nach Anspruch 2, **dadurch gekennzeichnet, dass** der geformte Körper (162, 172) einen Sitz (1721) aufweist, in den die quadratische Unterlegscheibe (52) eingeführt werden kann, so dass es beim Montageschritt problemlos in Position verbleibt, so dass die Druckfläche durch die Klemmmittel auf dem geformten Körper (162, 172) gut definiert ist.

4. Schnellblockier-/Lösevorrichtung zum Befestigen eines mit Führungen versehenen Kotflügels (40) nach einem der Ansprüche 2 und 3, **dadurch gekennzeichnet, dass** die Befestigungsmittel (10) und das mindestens eine Paar Führungen (46, 47) so konfiguriert sind, dass, sobald das Befestigungsmittel (10) mit seinen eigenen geformten Profilen (16, 17) in die Führungen (46, 47) des Kotflügels (40) eingegriffen hat, kann dieser frei bis zu der gewünschten Montageposition gleiten, und im Folgenden können die geformten Körper (162, 172) durch die Einwirkung auf die Klemmmittel der oberen Fläche (161, 172) angenähert werden, wodurch die relative Position zwischen Befestigungsmittel und Kotflügel durch Reibung fixiert wird.

5. Schnellblockier-/Lösevorrichtung zum Befestigen eines mit Führungen versehenen Kotflügels (40) nach einem der vorangehenden Ansprüche, **dadurch gekennzeichnet, dass** der Kotflügel (40) zwei Paare von Gleitführungen (46, 47) zu je einem von denen ein entsprechendes Befestigungsmittel (10) zugeordnet werden kann, so dass die Befestigung des Kotflügels (40) an ein Paar Rohren (30), die fest mit dem Rahmen verbunden sind, ermöglicht werden kann.

## Revendications

1. Dispositif de blocage/déblocage rapide pour la fixation d'un pare-chocs (40) muni de guides, comprenant:
- un pare-chocs(40),
- un insert (20) configuré pour être introduit dans un tube creux (30) solidaire du châssis d'un véhicule, et
- un moyen de fixation (10) configuré pour être fixé à la fois au insert (20) et au pare-chocs (40), le pare-chocs comprenant sur sa surface extérieure au moins une paire de guides parallèles (46, 47), les moyens de fixation (10) comprenant dans leur propre partie inférieure deux profiles profilés (16, 17) configurés pour engager les guides (46, 47), chacun desdits profiles profilés comprenant une surface supérieure (161, 171), un corps profilé inférieur (162, 172) et un espace compris entre la surface supérieure (161, 171) et le corps profilé inférieur (162, 172), dans lequel le corps profilé inférieur (162, 172) est configuré de sorte que sa distance par rapport à la surface supérieure (161, 171) peut varier suite à l'actionnement de moyens de serrage appropriés, la géométrie des guides (46, 47) et des profils (16, 17) étant telle que ceux-ci ne peuvent engager les guides (46, 47) qu'en glissant depuis la partie inférieure de celui-ci, et qu'une fois que les profils (16, 17) ont engagé les guides, le seul mouvement autorisé entre les moyens de fixation (10) et le pare-chocs (40) est coulissant le long de l'axe des guides, dans lequel les moyens de fixation (10) comprennent des moyens de serrage (51, 52, 53, 54) configurés pour pousser, après l'action d'un outil, le corps profilé (162, 172) vers la surface supérieure (161, 171), **caractérisé en ce que** les moyens de serrage comprennent une vis à tête ronde et tige carrée (51), une rondelle carrée (52), une rondelle ronde (53) et un écrou anti-dévissage (53), et **en ce que** celui-ci peut être assemblé de manière à presser le corps profilé (162, 172) et la surface supérieure (161, 171) entre les rondelles (52, 53).

2. Dispositif de blocage/déblocage rapide pour la fixation d'un pare-chocs (40) muni de guides selon la revendication 1, **caractérisé en ce que** l'espace compris entre la surface supérieure (161, 171) et le corps profilé inférieur (162, 172), a une forme apte à permettre d'engager un guide coulissant respectif (46, 47) prévu sur le pare-chocs (40).

3. Dispositif de blocage/déblocage rapide pour la fixation d'un pare-chocs (40) muni de guides selon la revendication 2, **caractérisé en ce que** le corps profilé (162, 172) comprend un siège (1721), dans lequel la rondelle carrée (52) peut être introduite de sorte qu'il reste en position sans difficulté dans l'étape d'assemblage, et de sorte que la zone d'appui par les moyens de serrage sur le corps profilé (162, 172) est bien définie.

4. Dispositif de blocage/déblocage rapide pour la fixation d'un pare-chocs (40) muni de guides selon l'une quelconque des revendications 2 et 3, **caractérisé en ce que** les moyens de fixation (10) et le au moins un couple de guides (46, 47) sont configurés de telle sorte que, une fois que le moyen de fixation (10) a engagé avec ses propres profils profilés (16, 17) les guides (46, 47) du pare-chocs (40), celles-ci peuvent coulisser librement jusqu'à la position de montage souhaitée, et dans ce qui suit, par l'action sur les moyens de serrage, les corps profilés (162, 172) peuvent être rapprochés vers la surface supérieure (161, 172), en fixant ainsi par frottement la position relative entre les moyens de fixation et le pare-chocs.

5. Dispositif de blocage/déblocage rapide pour la fixation d'un pare-chocs (40) muni de guides selon l'une quelconque des revendications précédentes, **caractérisé en ce que** le pare-chocs (40) comprend deux couples de guides coulissants (46, 47), à chacun desquels un moyen de fixation respectif (10) peut être associé, de sorte que la fixation du pare-chocs (40) à un couple de tubes (30) solidaires du châssis peut être autorisée.
